# EUROPÄISCHE PATENTSCHRIFT

(11) **EP 2 394 042 B1**
(45) Veröffentlichungstag und Bekanntmachung des Hinweises auf die Patenterteilung: **12.07.2017**
(21) Anmeldenummer: 10704319.2
(22) Anmeldetag: 03.02.2010
(51) Int. Cl.: F02D 41/00, F02B 21/00

(54) **VERFAHREN UND VORRICHTUNG ZUM REGELN EINES LADELUFTDRUCKS EINER VERBRENNUNGSKRAFTMASCHINE EINES FAHRZEUGS**
METHOD AND APPARATUS FOR REGULATING A CHARGE AIR PRESSURE OF AN INTERNAL COMBUSTION ENGINE OF A VEHICLE
PROCÉDÉ ET DISPOSITIF DE RÉGULATION DE LA PRESSION D'AIR DE SURALIMENTATION D'UNE MACHINE À COMBUSTION INTERNE D'UN VÉHICULE

(30) Priorität: 05.02.2009 DE 102009007690
(43) Veröffentlichungstag der Anmeldung: 14.12.2011
(73) Patentinhaber: KNORR-BREMSE Systeme für Nutzfahrzeuge GmbH, 80809 München (DE)
(72) Erfinder: MARX, Manuel, 85258 Weichs (DE); GERUM, Eduard, 83026 Rosenheim (DE); NÉMETH, Huba, H-1116 Budapest (HU)
(74) Vertreter: Schönmann, Kurt
(86) Internationale Anmeldenummer: PCT/EP2010/000640
(87) Internationale Veröffentlichungsnummer: WO 2010/089087

(56) Entgegenhaltungen:
- DE-A1- 19 637 571
- DE-A1-102004 047 975
- DE-A1-102007 033 693

## Beschreibung

Die Erfindung betrifft ein Verfahren zum Regeln eines Ladeluftdrucks einer Verbrennungskraftmaschine eines Fahrzeugs mit einem Abgasturbolader, einer Frischgasversorgungseinrichtung, einem Fahrzeugluftsystem mit einer Luftaufbereitung und mit einem durch den Abgasturbolader aufladbaren Kompressor und einem Motorsteuergerät, sowie entsprechende Vorrichtungen.

Eine Verbrennungskraftmaschine mit Abgasturbolader weist in bestimmten Betriebszuständen, insbesondere bei einer Drehmomentanforderung, Phasen unzureichender Luftzufuhr durch den Abgasturbolader mit verdichteter Frischluft auf, wodurch ein so genanntes Turboloch entsteht. Zur Eliminierung dieses Turbolochs wird der erhöhte Luftbedarf durch eine Frischgasversorgungseinrichtung mittels zusätzlicher Frischluftzufuhr gedeckt. Diese zusätzliche Frischluft kann zum Beispiel einem Druckluftspeicher eines Fahrzeugluftsystems entnommen werden. Dazu ist es erforderlich, dass der zugehörige Kompressor zur Lieferung von Druckluft für diesen erhöhten Bedarf ausgelegt ist. Ein derartiger Kompressor kann aufgeladen sein, das heißt, dass er verdichtete Luft aus dem Abgasturbolader nutzen kann.

Als nachteilig wird dabei gesehen, dass der Verbrennungskraftmaschine, unabhängig davon, ob diese sich gerade in einem Betriebspunkt befindet, in welchem sie die von dem Abgasturbolader verdichtete Frischluft benötigt oder nicht, verdichtete Luft in Strömungsrichtung hinter dem Abgasturbolader entzogen wird. Dies kann zu inakzeptablen Leistungseinbrüchen führen.

Kompressoren sind vorwiegend mechanisch angetrieben. Der Vorteil eines so genannten Kupplungskompressors ist erst in den vergangenen Jahren, mit ständig ansteigenden Kraftstoffpreisen, wieder aktuell geworden. Auch kontinuierlich aufgeladene Kompressoren sind insbesondere in den USA Stand der Technik. Zum Beispiel ist aus der DE102008004807A1 ein Kupplungskompressor mit Aufladung bekannt.

Elektronisch geregelte Luftaufbereitungssysteme sind ebenfalls Stand der Technik und werden serienmäßig in mit Druckluft gebremsten Nutzfahrzeugen verbaut. Eine Frischgasversorgungseinrichtung ist zum Beispiel aus der WO2006/089779A1 bekannt. Alle Systeme für sich bringen Vorteile in Bezug auf Kraftstoffeinsparung, Emissionen und/oder transientem Leistungsvermögen eines Fahrzeugs. Das Gesamtpotenzial unter Berücksichtigung der Anforderungen der Verbrennungskraftmaschine mit Abgasturbolader wird allerdings nicht realisiert.

DE 10 2004 047975 A1 beschreibt ein Verfahren und eine Vorrichtung zum Steigern eines Drehmomentes einer Hubkolben-Verbrennungsmaschine, insbesondere eines Motors in Dieselausführung. Die Maschine umfasst jeweils mindestens einen Zylinder, eine Turbine, einen Verdichter, einen Luftpresser, einen ersten und zweiten Speicher, eine Ladeluftkühlung in einer Ladeluftleitung, einen Lufttrockner, ein Einspeiseventil und eine Steuereinrichtung. Luft aus der Ladeluftleitung oder von einem zweiten Lufteinlass wird von dem Luftpresser verdichtet und in dem Speicher gespeichert. Die so gespeicherte Druckluft wird durch ein Einlassventil in den Zylinder zur Steigerung eines Drehmomentes des Motors getaktet eingeblasen. Der Luftpresser kann mit seinem Einlass über ein Umschaltventil mit dem zweiten Lufteinlass oder der Ladeluftleitung in Abhängigkeit von einem in der Ladeluftleitung herrschenden Druck verbunden werden.

DE 10 2007 033693 A1 gibt eine Anordnung zur Rückgewinnung ungenutzter Energie von Abgas einer Verbrennungskraftmaschine und entsprechende Verfahren an. Die Anordnung umfasst eine vom Abgas angetriebene Ladeeinrichtung zur Erzeugung komprimierter Ansaugluft für die Verbrennungskraftmaschine und einen Luftkompressor mit zumindest einer Verdichtungsstufe, welcher mit der Ladeeinrichtung zur Entnahme von zumindest einer einstellbaren Teilmenge der komprimierten Ansaugluft verbunden ist. Der Luftkompressor kann mit einer eigenen Steuereinrichtung, die mit einer vorhandenen Motorsteuerung kommunizieren kann, ausgebildet sein.

DE 196 37 571 A1 beschreibt eine Brennkraftmaschine mit Abgasturbolader und Kompressor. Zwischen dem Abgasturbolader und dem Luftverdichter ist eine Überschuss-Rückführleitung vorgesehen, über welche beim Überschreiten eines maximal zulässigen Ladedrucks die von dem Abgasturbolader erzeugte überschüssige Ladeluft auf die Saugseite des weiteren Luftverdichters geleitet wird.

Es ist daher die Aufgabe der Erfindung, verbesserte Verfahren zum Regeln eines Ladeluftdrucks einer Verbrennungskraftmaschine eines Fahrzeugs mit einem Abgasturbolader bereitzustellen, wobei die obigen Nachteile behoben beziehungsweise bedeutend verringert und weitere Vorteile geschaffen sind. Eine weitere Aufgabe der Erfindung besteht darin, entsprechende Vorrichtungen anzugeben.

Die Aufgabe wird durch Verfahren mit den Merkmalen der Ansprüche 1 und 4 gelöst. Die Aufgabe wird ferner durch Vorrichtungen mit den Merkmalen der Ansprüche 9 und 11 gelöst. Ein Erfindungsgedanke besteht darin, dass bei einer Drehmomentanforderung an die Verbrennungskraftmaschine ein Regeln des Ladeluftdrucks durch Unterbinden einer Zuführung von durch den Abgasturbolader gelieferter verdichteter Luft an den Kompressor erfolgt, wodurch der Ladeluftdruck schnell auf seinen Sollwert ansteigt und das Turboloch erheblich reduziert wird. Es ergeben sich ausgezeichnete Beschleunigungswerte bei gleichzeitig besten Verbrauchswerten.

Hierdurch können weiterhin folgende Vorteile realisiert werden:
- eine maximale Luftförderung des Kompressors im aufgeladenen Zustand, insbesondere in Schub- bzw. Bremsphasen des Fahrzeugs, um das Fahrzeugluftsystem mit Luft zu versorgen bzw. zu befüllen
- eine maximale Luftförderung des Kompressors im aufgeladenen Zustand, insbesondere in Phasen, in welchen die Verbrennungskraftmaschine nicht die Maximalmenge an Frischluft benötigt bzw. zu viel Ladedruck vorhanden ist (z.B. Teillast bzw. Waste Gate Phase), um das Fahrzeugluftsystem zu befüllen

Demgemäß weist ein erstes Verfahren zum Regeln eines Ladeluftdrucks einer Verbrennungskraftmaschine eines Fahrzeugs mit einem Abgasturbolader, einer Frischgasversorgungseinrichtung, einem Fahrzeugluftsystem mit einer Luftaufbereitung und mit einem durch den Abgasturbolader aufladbaren Kompressor und einem Motorsteuergerät, folgende Verfahrensschritte auf:
- Erfassen einer Drehmomentanforderung an die Verbrennungskraftmaschine, Ermitteln eines aktuellen Ladeluftdrucks und Ermitteln eines aktuellen Drucks des Fahrzeugluftsystems;
- Vergleichen des aktuellen Ladeluftdrucks mit einem zu dieser Drehmomentanforderung korrespondierenden Soll-Ladeluftdruck und
- Vergleichen des ermittelten aktuellen Drucks des Fahrzeugluftsystems mit einem Sollbetriebsdruck des Fahrzeugluftsystems; und
- Regeln des Ladeluftdrucks durch Unterbinden einer Zuführung von durch den Abgasturbolader gelieferter verdichteter Luft an den Kompressor, wenn der ermittelte aktuelle Ladeluftdruck kleiner als der korrespondierende Soll-Ladeluftdruck ist und der aktuelle Druck des Fahrzeugluftsystems größer als der oder gleich dem Sollbetriebsdruck des Fahrzeugluftsystems ist.

Hiermit wird eine intelligente Regelung von Motorsteuerung, elektronischer Luftaufbereitung und aufgeladenem Kompressor geschaffen, wodurch erstens der zusätzliche Luftbedarf durch eine Frischgasversorgungseinrichtung gedeckt wird. Zweitens werden die Nachteile in Bezug auf die Leistung einer Verbrennungskraftmaschine mit Abgasturbolader vermieden.

Phasen, in welchen die Verbrennungskraftmaschine bei einer Drehmomentanforderung, beispielsweise bei Betätigung eines Gaspedals, z.B. die maximale Frischluftzufuhr des Abgasturboladers benötigt, werden von dem Motorsteuergerät erkannt, und es ermittelt den zugehörigen aktuellen Ladeluftdruck, der mit einem Sollwert verglichen wird, um bei zu geringem Ladeluftdruck zum Beispiel ein Signal zu erzeugen. Das Signal wird der Luftaufbereitung zugeführt, welche auf Basis des aktuellen Druckniveaus des Fahrzeugluftsystems entscheidet, ob der Kompressor in dieser Phase Druckluft fördern muss. Ist dieser Druck des Fahrzeugluftsystems ausreichend, dann wird die Zuführung verdichteter Luft vom Abgasturbolader an den Kompressor unterbunden, indem der Kompressor ausgeschaltet wird. Das erfolgt bei einem Kompressor mit elektrischem Antrieb, indem der elektrische Antrieb ausgeschaltet wird. Ist der Kompressor über eine schaltbare Kupplungseinrichtung mit der Verbrennungsmaschine verbunden, so kann die schaltbare Kupplungseinrichtung ausgekuppelt werden. Auch eine Kombination beider Antriebsarten und andere sind denkbar.

Damit wird erreicht, dass der Ladeluftdruck am Einlass- bzw. Ansaugkrümmer der Verbrennungskraftmaschine schnell aufgebaut wird, da keine verdichtete Luft für den Kompressor, der ausgeschaltet ist, abgezweigt wird. Der Kompressor wird erst wieder eingeschaltet bzw. für ein Einschalten freigegeben, wenn die Drehmomentanforderung beendet ist.

Das Ausschalten des Kompressors kann durch das Motorsteuergerät, die Luftaufbereitung oder/und eine Kompressorsystemsteuereinrichtung ausgeführt werden.

Weiterhin weist ein zweites Verfahren zum Regeln eines Ladeluftdrucks einer Verbrennungskraftmaschine eines Fahrzeugs mit einem Abgasturbolader, einer Frischgasversorgungseinrichtung, einem Fahrzeugluftsystem mit einer Luftaufbereitung und mit einem Kompressor und einem Motorsteuergerät, wobei dem Kompressor verdichtete Luft aus dem Abgasturbolader oder Luft aus zumindest einer weiteren Luftquelle zugeführt wird, folgende Verfahrensschritte auf:
- Erfassen einer Drehmomentanforderung an die Verbrennungskraftmaschine, Ermitteln eines aktuellen Ladeluftdrucks und Ermitteln eines aktuellen Drucks des Fahrzeugluftsystems;
- Vergleichen des aktuellen Ladeluftdrucks mit einem zu dieser Drehmomentanforderung korrespondierenden Soll-Ladeluftdruck und
- Vergleichen des ermittelten aktuellen Drucks des Fahrzeugluftsystems mit einem Sollbetriebsdruck des Fahrzeugluftsystems; und
- Regeln des Ladeluftdrucks durch Unterbinden einer Zuführung von durch den Abgasturbolader gelieferter verdichteter Luft an den Kompressor, wenn der ermittelte aktuelle Ladeluftdruck kleiner als der korrespondierende Soll-Ladeluftdruck ist und der aktuelle Druck des Fahrzeugluftsystems größer als oder gleich dem Sollbetriebsdruck des Fahrzeugluftsystems ist, oder durch Unterbinden einer Zuführung von durch den Abgasturbolader gelieferter verdichteter Luft an den Kompressor und Zuführen von Luft an den Kompressor aus zumindest einer weiteren Luftquelle, wenn der ermittelte aktuelle Ladeluftdruck kleiner als der korrespondierende Soll-Ladeluftdruck ist und der aktuelle Druck des Fahrzeugluftsystems kleiner als der Sollbetriebsdruck des Fahrzeugluftsystems ist.

Hier ist es ein bedeutender Vorteil, dass nicht nur in dem Fall, wenn der ermittelte aktuelle Ladeluftdruck kleiner als der korrespondierende Soll-Ladeluftdruck ist und der aktuelle Druck des Fahrzeugluftsystems größer als oder gleich dem Sollbetriebsdruck des Fahrzeugluftsystems ist, zum Unterbinden der Zuführung von durch den Abgasturbolader gelieferter verdichteter Luft an den Kompressor der Kompressor ausgeschaltet wird (wie oben näher erläutert), sondern dass auch in einem möglichen Extremfall, wenn während der Phase der Drehmomentanforderung eine Befüllung des Fahrzeugluftsystems, das heißt ein Betrieb des Kompressors, zwingend erforderlich ist, ein Unterbinden der der Zuführung von durch den Abgasturbolader gelieferter verdichteter Luft an den Kompressor erfolgen und der Kompressor gleichzeitig weiter fördert. Dies kann dadurch ermöglicht werden, dass in diesem Fall der Kompressor mit der zumindest einen weiteren Luftquelle durch Umschalten zumindest eines Ventils verbunden wird. Dabei wird zum Beispiel eine Verbindung des Kompressoreinlasses zum Verdichter des Abgasturboladers durch ein Ventil verschlossen und der Kompressoreinlass durch ein weiteres Ventil mit einer weiteren Luftquelle, zum Beispiel der Umgebungsluft, verbunden. Der Kompressor arbeitet in diesem Fall nicht in einem aufgeladenen Zustand, aber kann die erforderliche Druckluft trotzdem erzeugen, wobei gleichzeitig der Ladeluftdruck optimal geregelt wird.

Das Vergleichen der Ladeluftdrücke kann durch das Motorsteuergerät erfolgen. Es erzeugt zum Beispiel ein Signal, wenn der ermittelte aktuelle Ladeluftdruck kleiner als der korrespondierende Soll-Ladeluftdruck ist, wobei das erzeugte Signal an die Luftaufbereitung geleitet wird, welche dann das Vergleichen des ermittelten aktuellen Drucks des Fahrzeugluftsystems mit dem Sollbetriebsdruck des Fahrzeugluftsystems ausführt. Es ist aber auch möglich, dass die Luftaufbereitung das Vergleichen der Ladeluftdrücke durchführt. Es kann hierzu auch ein zusätzliches Steuergerät zum Einsatz kommen, wobei viele Kombinationen denkbar sind.

Weiterhin ist vorgesehen, dass das Unterbinden der Zuführung von durch den Abgasturbolader gelieferter verdichteter Luft an den Kompressor durch das Motorsteuergerät, die Luftaufbereitung oder/und eine Kompressorsystemsteuereinrichtung ausgeführt werden kann. Auch hier sind weitere Kombinationen möglich.

Eine Vorrichtung zur Regelung eines Ladeluftdrucks einer Verbrennungskraftmaschine eines Fahrzeugs umfasst: einen Abgasturbolader zur Erzeugung verdichteter Ladeluft; eine Frischgasversorgungseinrichtung zur Zuführung der verdichteten Ladeluft und von zusätzlichem Frischgas zur Verbrennungskraftmaschine; ein Fahrzeugluftsystem mit einer Luftaufbereitung, wobei die Luftaufbereitung zur Steuerung des Fahrzeugluftsystems und zur Ermittlung eines aktuellen Drucks des Fahrzeugluftsystems vorgesehen ist; einen Kompressor zur Erzeugung von Druckluft für das Fahrzeugluftsystem, wobei der Kompressor zur Zuführung von verdichteter Ladeluft an den Kompressor mit dem Abgasturbolader verbunden ist; und ein Motorsteuergerät zur Steuerung der Verbrennungskraftmaschine, zur Erfassung einer Drehmomentanforderung an die Verbrennungskraftmaschine zur Ermittlung eines aktuellen Ladeluftdrucks, wobei das Motorsteuergerät zum Vergleich des aktuellen Ladeluftdrucks mit einem zu dieser Drehmomentanforderung korrespondierenden Soll-Ladeluftdruck und zur Erzeugung eines Signals, wenn der aktuelle Ladeluftdruck kleiner als der Soll-Ladeluftdruck ist, und zur Weiterleitung dieses Signals an die Luftaufbereitung ausgebildet ist, und wobei die Luftaufbereitung) und/oder das Motorsteuergerät zum Vergleich des ermittelten aktuellen Drucks des Fahrzeugluftsystems mit einem Sollbetriebsdruck des Fahrzeugluftsystems und zur Regelung des Ladeluftdrucks durch Unterbindung einer Zuführung von durch den Abgasturbolader gelieferter verdichteter Luft an den Kompressor wenn der ermittelte aktuelle Ladeluftdruck kleiner als der korrespondierende Soll-Ladeluftdruck ist und der aktuelle Druck des Fahrzeugluftsystems größer als der oder gleich dem Sollbetriebsdruck des Fahrzeugluftsystems ist, ausgebildet ist.

Diese Vorrichtung eignet sich besonders zur Durchführung des oben erläuterten ersten Verfahrens.

Eine weitere Vorrichtung zur Regelung eines Ladeluftdrucks einer Verbrennungskraftmaschine eines Fahrzeugs wird bereitgestellt und ist versehen mit einem Abgasturbolader zur Erzeugung verdichteter Ladeluft; einer Frischgasversorgungseinrichtung zur Zuführung der verdichteten Ladeluft und von zusätzlichem Frischgas zur Verbrennungskraftmaschine; einem Fahrzeugluftsystem mit einer Luftaufbereitung, wobei die Luftaufbereitung zur Steuerung des Fahrzeugluftsystems und zur Ermittlung eines aktuellen Drucks des Fahrzeugluftsystems vorgesehen ist; einem Kompressor zur Erzeugung von Druckluft für das Fahrzeugluftsystem, wobei der Kompressor zur Zuführung von verdichteter Ladeluft an den Kompressor mit dem Abgasturbolader und zur Zuführung von Ladeluft aus zumindest einer weiteren Luftquelle verbindbar ist; und einem Motorsteuergerät zur Steuerung der Verbrennungskraftmaschine und zur Erfassung einer Drehmomentanforderung an die Verbrennungskraftmaschine, wobei das Motorsteuergerät zum Vergleich des aktuellen Ladeluftdrucks mit einem zu dieser Drehmomentanforderung korrespondierenden Soll-Ladeluftdruck und zur Erzeugung eines Signals, wenn der aktuelle Ladeluftdruck kleiner als der Soll-Ladeluftdruck ist, und zur Weiterleitung dieses Signals an die Luftaufbereitung ausgebildet ist, und wobei die Luftaufbereitung und/oder das Motorsteuergerät zum Vergleich des ermittelten aktuellen Drucks des Fahrzeugluftsystems mit einem Sollbetriebsdruck des Fahrzeugluftsystems und zur Regelung des Ladeluftdrucks durch Unterbindung einer Zuführung von durch den Abgasturbolader gelieferter verdichteter Luft an den Kompressor, wenn der ermittelte aktuelle Ladeluftdruck kleiner als der korrespondierende Soll-Ladeluftdruck ist und der aktuelle Druck des Fahrzeugluftsystems größer als der oder gleich dem Sollbetriebsdruck des Fahrzeugluftsystems ist, und durch Unterbinden einer Zuführung von durch den Abgasturbolader gelieferter verdichteter Luft an den Kompressor und Zuführung von Luft an den Kompressor aus zumindest einer weiteren Luftquelle, wenn der ermittelte aktuelle Ladeluftdruck kleiner als der korrespondierende Soll-Ladeluftdruck ist und der aktuelle Druck des Fahrzeugluftsystems kleiner als der Sollbetriebsdruck des Fahrzeugluftsystems ist, ausgebildet ist.

Diese Vorrichtung eignet sich besonders zur Durchführung des oben erläuterten zweiten Verfahrens.

Es ist dabei vorgesehen, dass der Kompressor über ein Saugluftventil mit der zumindest einen weiteren Luftquelle verbindbar und über ein Ladeluftventil mit dem Abgasturbolader verbindbar ist. Die weitere Luftquelle kann zum Beispiel die Umgebungsluft und/oder Luft aus einem weiteren Abgasturbolader oder einer anderen Luftverdichtereinrichtung sein.

Die Vorrichtung kann zur Verbindung des Motorsteuergeräts, der Luftaufbereitung, der Frischgasversorgungseinrichtung und einer Kompressorsystemsteuereinrichtung eine Buseinrichtung aufweisen. Diese Buseinrichtung kann zum Beispiel ein schon vorhandener CAN-Bus oder auch ein separater Bus sein.

Die Erfindung wird nun anhand von Ausführungsbeispielen mit Bezug auf die beigefügten Zeichnungen näher erläutert. Hierbei zeigt:
- Fig. 1: ein Diagramm einer Gaspedalstellung bei einer Drehmomentanforderung für eine Verbrennungskraftmaschine über der Zeit;
- Fig. 2: verschiedene Druckverläufe eines Ladeluftdrucks bei verschiedenen Betriebszuständen der Verbrennungskraftmaschine im Zusammenhang mit dem Diagramm der Fig. 1;
- Fig. 3: ein Blockdiagramm eines ersten Ausführungsbeispiels einer erfindungsgemäßen Vorrichtung; und
- Fig. 4: ein Blockdiagramm eines zweiten Ausführungsbeispiels der erfindungsgemäßen Vorrichtung.

Gleiche Bauelemente bzw. Funktionseinheiten mit gleicher Funktion sind mit gleichen Bezugszeichen in den Figuren gekennzeichnet.

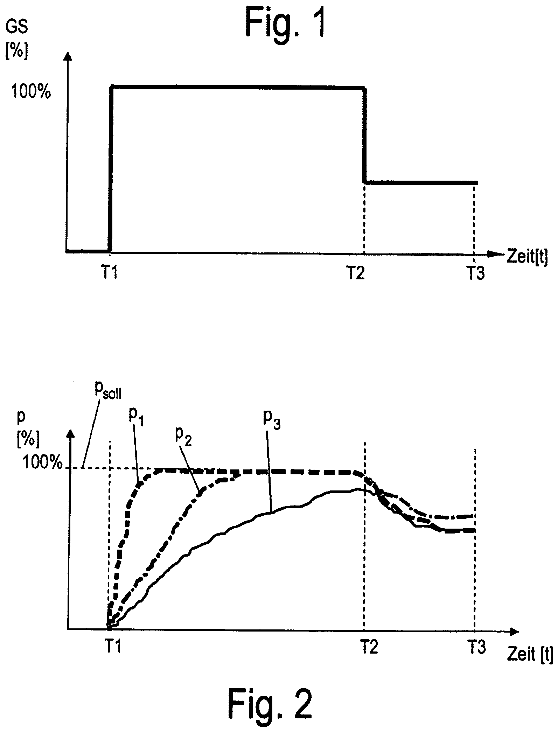

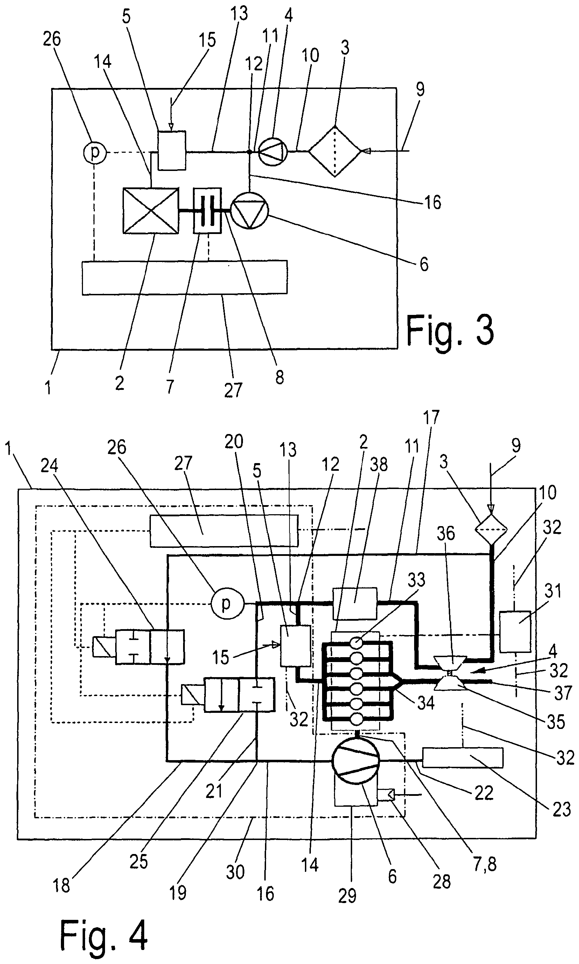

In Fig. 1 ist ein Diagramm einer Gaspedalstellung GS bei einer Drehmomentanforderung für eine Verbrennungskraftmaschine über der Zeit t dargestellt. Fig. 1 wird im Zusammenhang mit Fig. 2 und Fig. 3 erläutert. Fig. 2 stellt verschiedene Druckverläufe p₁, p₂, p₃ eines Ladeluftdrucks p bei verschiedenen Betriebszuständen der Verbrennungskraftmaschine im Zusammenhang mit dem Diagramm der Fig. 1 dar. Fig. 3 ist ein Blockdiagramm eines ersten Ausführungsbeispiels einer erfindungsgemäßen Vorrichtung.

Zunächst wird Fig. 3 beschrieben. Ein Fahrzeug 1 ist mit einem rechteckigen Kasten angedeutet. Es weist eine Verbrennungskraftmaschine 2 auf, deren Ansaugkrümmer 14 mit einer Frischgasversorgungseinrichtung 5, wie sie beispielsweise in WO2006/089779A1 beschrieben ist, verbunden ist. Die Frischgasversorgungseinrichtung 5 ist einerseits über eine Ladeluftleitung 13 mit einer Verdichterdruckleitung 11 eines Abgasturboladers 4 und andererseits mit einer Zusatzluftleitung 15 für Zusatzluft, zum Beispiel aus einem Druckluftspeicher, verbunden. Der Abgasturbolader 4 erhält seine Ansaugluft zum Verdichten durch eine Verdichtersaugleitung 10 über einen Luftfilter 3 aus einem Lufteinlass 9. Weiterhin kommunizieren die Ladeluftleitung 13 und die Verdichterdruckleitung 11 mit einer Kompressoreinlassleitung 16 in einem Knotenpunkt 12. Die Kompressoreinlassleitung 16 ist mit einem Lufteinlass eines Kompressors 6 verbunden, welcher zur Komprimierung und Förderung von verdichteter Luft vom Abgasturbolader 4 aus der Ladeluftleitung 13 vorgesehen ist. Der Kompressor 6 ist somit ein so genannter aufgeladener Kompressor 6. Angetrieben wird der Kompressor 6 über einen Kompressorantrieb 8 von der Verbrennungskraftmaschine 2 über eine schaltbare Kupplungseinrichtung 7. Die schaltbare Kupplungseinrichtung 7 kann zum Beispiel elektromagnetisch, hydraulisch, pneumatisch oder aus einer Kombination davon sein. Eine Kompressorsystemsteuereinrichtung 27 ist mit der Kupplungseinrichtung 7 zur Steuerung derselben in geeigneter Weise verbunden. Ein Drucksensor 26 ist zur Messung eines Ladeluftdrucks p im Ansaugkrümmer 14 mit der Kompressorsystemsteuereinrichtung 27 verbunden. Steuerleitungen und Signalleitungen sind gestrichelt gezeigt.

Bei einer Drehmomentanforderung, z. B. einer spontanen Lastanforderung für eine Beschleunigung bei einem Überholvorgang des Fahrzeugs 1, wird ein Gaspedal des Fahrzeugs 1 zu einem Zeitpunkt T1 von 0% (Schubbetrieb) in eine Gaspedalstellung GS gestellt, welche hier zum Beispiel eine Vollgasstellung mit 100% Verstellung ist. Zeitgleich (siehe Fig. 2) erhöht sich der Ladeluftdruck p bis zu einem Maximum, das durch einen Soll-Ladeluftdruck pₛₒₗₗ bezeichnet ist. Dabei steigt der Ladeluftdruck p als Ladeluftdruck p₂ korrespondierend zu der Anordnung aus Fig. 3 an und erreicht den Soll-Ladeluftdruck pₛₒₗₗ etwa in der Mitte zwischen dem Zeitpunkt T1 und einem zweiten Zeitpunkt T2. Zu diesem Zeitpunkt T2 benötigt der Fahrer keine Volllast mehr und stellt das Gaspedal zurück auf eine Gaspedalstellung von z.B. 20...30%, was einer Konstantfahrt entsprechen könnte. Ebenfalls sinkt der Ladeluftdruck p ab.

Im Zeitraum T1-T2 benötigt die Verbrennungskraftmaschine die maximal verfügbare Frischluft vom Abgasturbolader 4, damit die Lastanforderung des Fahrers erfüllt werden kann. Gleichzeitig liefert die Frischgasversorgungseinrichtung 5 Zusatzluft in den Ansaugkrümmer 14. Zweigt in dieser Phase der aufgeladene Kompressor 6 verdichtete Frischluft aus der Ladeluftleitung 13 in Strömungsrichtung hinter dem Abgasturbolader 4 ab, ergibt sich in Fig. 2 der Verlauf des Ladeluftdrucks Dieser Ladeluftdruck p₃ baut sich deutlich langsamer auf, woraus eine deutlich geringere Beschleunigung und ein späteres Erreichen eines optimalen Betriebspunktes der Verbrennungskraftmaschine 1 mit einem erhöhten Kraftstoffverbrauch resultiert.

Durch ein erfindungsgemäßes Verfahren zum Regeln des Ladeluftdrucks p wird ein Verlauf eines Ladeluftdrucks p₁ erreicht. Dies wird dadurch erreicht, dass die Zuführung von verdichteter Ladeluft aus der Ladeluftleitung 13 zu dem Kompressor 4 unterbunden wird. In diesem ersten Ausführungsbeispiel (Fig. 3) wird der Kompressor 6 in dieser Phase ausgeschaltet, d.h. in diesem Beispiel während des Zeitraums T1-T2. Hierzu wird der aktuelle Ladeluftdruck p bei Beginn der Drehmomentanforderung im Zeitpunkt T1, was zum Beispiel durch ein Motorsteuergerät 31 (siehe Fig. 4) ermittelt wird, in diesem Beispiel durch den Drucksensor 26 gemessen und in der Kompressorsystemsteuereinrichtung 27 mit einem gespeicherten (z. B. in Tabellen- oder Kurvenform) Soll-Ladedruck pₛₒₗₗ verglichen. Dies wird zum Beispiel durch ein Signal des Motorsteuergeräts 31 aktiviert, das an die Kompressorsystemsteuereinrichtung 27 im Zeitpunkt T1, zum Beispiel über einen CAN-Bus als Buseinrichtung 32 (siehe Fig. 4), geliefert wird. Zur gleichen Zeit wird das Signal des Motorsteuergeräts 31 an eine Luftaufbereitung 23 geliefert (siehe Fig. 4), welche ein Fahrzeugluftsystem (einschließlich Druckluftbremsanlage) steuert und überwacht. Die Luftaufbereitung 23 vergleicht einen aktuellen Luftdruck ihres (nicht gezeigten) Luftspeichers mit einem Sollbetriebsdruck. Wenn der aktuelle Druck des Fahrzeugluftsystems größer als der oder gleich dem Sollbetriebsdruck des Fahrzeugluftsystems ist und gleichzeitig der ermittelte aktuelle Ladeluftdruck p kleiner als der korrespondierende Soll-Ladeluftdruck pₛₒₗₗ ist, wird der Kompressor 6 von der Kompressorsystemsteuereinrichtung 27 oder der Luftaufbereitung 23 ausgeschaltet, indem die schaltbare Kupplungseinrichtung 7 ausgekuppelt wird. Bei Erreichen des Zeitpunkts T2 (oder nach einem vorher einstellbaren oder berechenbaren Zeitwert) wird der Kompressor 6 durch Einkuppeln der Kupplungseinrichtung 7 wieder eingeschaltet. Im Zeitraum T2 bis zu einem Zeitpunkt T3 ergibt sich dann ein niedrigerer Ladedruck p als bei der Kurve Ladeluftdruck p₂ und gleich der Kurve Ladeluftdruck p₃. Dies ist dann unproblematisch, da hier keine Lastanforderung mehr besteht. Die Entscheidung, ob der Kompressor 6 im Zeitraum T1-T2 ausgeschaltet ist oder nicht, trifft ausschließlich die (elektronische) Luftaufbereitung 23, da es im Extremfall (z.B. Druckniveau des Bremssystems an einer vorher festlegbaren unteren Grenze) notwendig sein kann, dass der Kompressor 6 Druckluft liefern muss. Dieser Extremfall kann allerdings nur sehr selten auftreten.

In einem zweiten Ausführungsbeispiel der erfindungsgemäßen Vorrichtung, die Fig. 4 in einem Blockdiagramm zeigt, wird der Nachteil des oben angegebenen Extremfalls vermieden.

Fig. 4 stellt die Verbrennungskraftmaschine 2 etwas ausführlicher als Fig. 3 mit Zylindern 33, Ansaugkrümmer 14 und Auslasskrümmer 34 als Sechszylindermaschine dar. Ebenso ist der Abgasturbolader 4 mit einer Abgasturbine 35 zwischen Auslasskrümmer 34 und einem Abgasauslass 37 und einem Verdichter 36 zwischen Verdichterdruckleitung 11 und Verdichtersaugleitung 10 detaillierter illustriert.

Das oben erwähnte Motorsteuergerät 31 ist mit einer Buseinrichtung 32 verbunden, welche zum Beispiel ein CAN-Bus oder dergleichen sein kann.

Der Kompressor 6 ist in diesem Beispiel mit einem Schadraum 29 und einer Ventileinrichtung 28 gezeigt und in einem Kompressorsystem 30 mit Ventilen 24, 25 (zum Beispiel elektromagnetische oder elektropneumatische Ventile) und der Kompressorsystemsteuereinrichtung 27 verbunden. Steuerleitungen sind als gestrichelte bzw. als Strich-Zweipunkt-Linien dargestellt. Der Drucksensor 26 ist hier über die Ventile 24, 25 mit der Kompressorsystemsteuereinrichtung 27 verbunden. Die Kompressorsystemsteuereinrichtung 27 kommuniziert außerdem über die Buseinrichtung 32 mit dem Motorsteuergerät 31, der Luftaufbereitung 23 und auch mit der Frischgasversorgungseinrichtung 5.

In der Vorrichtung gemäß Fig. 4 ist der Kompressorantrieb 8 des Kompressors 6 mit der Verbrennungskraftmaschine 2 direkt verbunden (eine Kupplungseinrichtung 7 wie in Fig. 3 ist aber auch möglich). Der Kompressor 6 ist mit einer Ausgangsleitung 22 mit der Luftaufbereitung 23 verbunden, welche an die Buseinrichtung 32 angeschlossen ist.

Die Kompressoreinlassleitung 16 kommuniziert über eine Verbindungsstelle 9 mit einem Verbindungsabschnitt Saugluft 18 und einem Verbindungsabschnitt Ladeluft 21. Der Verbindungsabschnitt Ladeluft 21 ist über ein Ladeluftventil 25 mit einer Kompressorladeluftleitung 20 verbunden, welche über den Knotenpunkt 12 mit der Ladeluftleitung 13 und der Verdichterdruckleitung 11 kommuniziert. Die Frischgasversorgungseinrichtung 5 ist bereits unter Fig. 3 beschrieben. Die Verdichterdruckleitung 11 weist zwischen dem Knotenpunkt 12 und einem Verdichter 36 des Abgasturboladers 4 einen Ladeluftkühler 38 auf. Der Verbindungsabschnitt Saugluft 18 ist über ein Saugluftventil 24 mit einer Kompressorsaugluftleitung 17 verbunden, welche unterhalb des Filters 3 mit diesem und der Verdichtersaugleitung 10 kommuniziert.

Mittels der Ventile 24 und 25 ist der Kompressor 6 einerseits als aufgeladener Kompressor 6 und andererseits als Kompressor 6 mit Ansaugluft aus einer weiteren Luftquelle, zum Beispiel aus der Umgebung oder aus einem weiteren Luftspeicher oder einem weiteren Turbolader, betreibbar.

In diesem zweiten Ausführungsbeispiel wird der Kompressor 6 wie oben bereits beschrieben für den Fall, in welchem der aktuelle Druck des Fahrzeugluftsystems größer als der oder gleich dem Sollbetriebsdruck des Fahrzeugluftsystems ist und gleichzeitig der ermittelte aktuelle Ladeluftdruck p kleiner als der korrespondierende Soll-Ladeluftdruck pₛₒₗₗ ist, ausgeschaltet.

Der Kompressor 6 kann mittels der Ventile 24 und 25 vom aufgeladenen Betrieb in den Saugbetrieb geschaltet werden. Dabei wird das Ladeluftventil 25 geschlossen und unterbindet eine Zuführung von verdichteter Ladeluft aus der Verdichterdruckleitung 11. Gleichzeitig wird das Saugluftventil 24 geöffnet und verbindet die Kompressoreinlassleitung 16 mit dem Filter 3, so dass der Kompressor 6 im Saugbetrieb arbeitet. Die Ventile 24 und 25 können von der Kompressorsystemsteuereinrichtung 27, aber auch von anderen Einrichtungen, zum Beispiel Luftaufbereitung 23 und/oder Motorsteuergerät 31, gesteuert werden. Sie können auch eine eigene Steuereinrichtung aufweisen.

Sollte der oben beschriebene Extremfall auftreten, dass trotz der Drehmomentanforderung des Fahrers die elektronische Luftaufbereitung 23 entscheidet, dass Luft ins Fahrzeugluftsystem einzuspeisen ist, dann kann die elektronische Luftaufbereitung 23 über die Buseinrichtung 32 ein Signal an die Kompressorsystemsteuereinrichtung 27 zur Steuerung der Ventile 24 und 25 geben, um auf den Saugbetrieb (wie oben beschrieben) umzuschalten. Damit ist gewährleistet, dass immer der optimale Ladeluftdruck p vorhanden ist, woraus sich ein ausgezeichnetes Beschleunigungsvermögen bei gleichzeitig besten Verbrauchswerten der Verbrennungskraftmaschine 2 des Fahrzeugs 1 ergibt.

Die Erfindung ist nicht auf die oben beschriebenen Ausführungsbeispiele beschränkt. Sie ist im Rahmen der beigefügten Ansprüche modifizierbar.

Es ist auch möglich, dass der Kompressor 6 sowohl von der Verbrennungskraftmaschine 2 über die Kupplungseinrichtung 7 als auch von einem elektrischen Antrieb antreibbar ist. Dabei kann der Kompressor 6 ausgeschaltet werden, indem die Kupplungseinrichtung 7 ausgekuppelt und der elektrische Antrieb ausgeschaltet wird.

Steuersignale für die Ventile 24, 25 zum Umschalten und/oder Aus-/Einschalten des Kompressors 6 können von dem Motorsteuergerät 31, der Luftaufbereitung 23, der Kompressorsystemsteuereinrichtung 27, einer Ventilsteuereinheit oder ähnlichem gemäß den Vergleichen der verschiedenen Drücke über die Buseinrichtung 32 oder andere Schnittstellen geleitet werden.

Es ist selbstverständlich möglich, dass alle Steuereinheiten 31, 23, 27 und weitere in einem Steuergerät zusammengefasst oder noch weiter verteilt sind. Die Sollwerte sind bekanntermaßen in Tabellenform in Speichereinrichtungen der jeweiligen Steuergeräte dezentral oder zentral gespeichert und/oder gemäß geeigneten Algorithmen berechenbar.

### Bezugszeichenliste

- 1: Fahrzeug
- 2: Verbrennungskraftmaschine
- 3: Luftfilter
- 4: Abgasturbolader
- 5: Frischgasversorgungseinrichtung
- 6: Kompressor
- 7: Kupplungseinrichtung
- 8: Kompressorantrieb
- 9: Lufteinlass
- 10: Verdichtersaugleitung
- 11: Verdichterdruckleitung
- 12: Knotenpunkt
- 13: Ladeluftleitung
- 14: Ansaugkrümmer
- 15: Zusatzluftleitung
- 16: Kompressoreinlassleitung
- 17: Kompressorsaugluftleitung
- 18: Verbindungsabschnitt Saugluft
- 19: Verbindungsstelle
- 20: Kompressorladeluftleitung
- 21: Verbindungsabschnitt Ladeluft
- 22: Kompressorausgangsleitung
- 23: Luftaufbereitung
- 24: Saugluftventil
- 25: Ladeluftventil
- 26: Drucksensor
- 27: Kompressorsystemsteuereinrichtung
- 28: Ventileinrichtung
- 29: Kompressorschadraum
- 30: Kompressorsystem
- 31: Motorsteuergerät
- 32: Buseinrichtung
- 33: Zylinder
- 34: Auslasskrümmer
- 35: Abgasturbine
- 36: Verdichter
- 37: Abgasauslass
- 38: Ladeluftkühler
- GS: Gaspedalstellung
- p, p₁, p₂, p₃: Ladeluftdruck
- pₛₒₗₗ: Soll-Ladeluftdruck
- t: Zeit
- T1...3: Zeitpunkt

## Patentansprüche

1. Verfahren zum Regeln eines Ladeluftdrucks (p) einer Verbrennungskraftmaschine (2) eines Fahrzeugs (1) mit einem Abgasturbolader (4), einer Frischgasversorgungseinrichtung (5), einem Fahrzeugluftsystem mit einer Luftaufbereitung (23) und mit einem durch den Abgasturbolader (4) aufladbaren Kompressor (6) und einem Motorsteuergerät (31), wobei das Verfahren folgende Verfahrensschritte umfasst:
(i) Erfassen einer Drehmomentanforderung an die Verbrennungskraftmaschine (2), Ermitteln eines aktuellen Ladeluftdrucks (p) und Ermitteln eines aktuellen Drucks des Fahrzeugluftsystems;
(ii) Vergleichen des aktuellen Ladeluftdrucks (p) mit einem zu dieser Drehmomentanforderung korrespondierenden Soll-Ladeluftdruck (pₛₒₗₗ) und Vergleichen des ermittelten aktuellen Drucks des Fahrzeugluftsystems mit einem Sollbetriebsdruck des Fahrzeugluftsystems; und
(iii) Regeln des Ladeluftdrucks (p) durch Unterbinden einer Zuführung von durch den Abgasturbolader (4) gelieferter verdichteter Luft an den Kompressor (6), wenn der ermittelte aktuelle Ladeluftdruck (p) kleiner als der korrespondierende Soll-Ladeluftdruck (pₛₒₗₗ) ist und der aktuelle Druck des Fahrzeugluftsystems größer als der oder gleich dem Sollbetriebsdruck des Fahrzeugluftsystems ist,
wobei das Vergleichen des aktuellen Ladeluftdrucks (p) durch das Motorsteuergerät (31) erfolgt und dieses ein Signal erzeugt, wenn der ermittelte aktuelle Ladeluftdruck (p) kleiner als der korrespondierende Soll-Ladeluftdruck (pₛₒₗₗ) ist, wobei das erzeugte Signal an die Luftaufbereitung (23) geleitet wird, welche dann das Vergleichen des ermittelten aktuellen Drucks des Fahrzeugluftsystems mit dem Sollbetriebsdruck des Fahrzeugluftsystems ausführt, wobei
zum Unterbinden der Zuführung von durch den Abgasturbolader (4) gelieferter verdichteter Luft an den Kompressor (6) der Kompressor (6) ausgeschaltet wird.

2. Verfahren nach Anspruch 1, **dadurch gekennzeichnet, dass** das Ausschalten des Kompressors (6) durch das Motorsteuergerät (31), die Luftaufbereitung (23) oder/und eine Kompressorsystemsteuereinrichtung (27) ausgeführt wird.

3. Verfahren nach Anspruch 1 oder 2, **dadurch gekennzeichnet, dass** beim Ausschalten bei einem elektrisch angetriebenen Kompressor (6) der elektrische Antrieb ausgeschaltet wird, bei einem über eine schaltbare Kupplungseinrichtung (7) mit einem Antrieb gekoppelten Kompressor (6) die Kupplungseinrichtung (7) ausgekuppelt wird und/oder bei einem sowohl von einem elektrischen Antrieb als auch über eine schaltbare Kupplungseinrichtung (7) von einem weiteren Antrieb angetriebenen Kompressor (6) der elektrische Antrieb ausgeschaltet und die schaltbare Kupplungseinrichtung (7) ausgekuppelt wird.

4. Verfahren zum Regeln eines Ladeluftdrucks (p) einer Verbrennungskraftmaschine (2) eines Fahrzeugs (1) mit einem Abgasturbolader (4), einer Frischgasversorgungseinrichtung (5), einem Fahrzeugluftsystem mit einer Luftaufbereitung (23) und mit einem Kompressor (6) und einem Motorsteuergerät (31), wobei dem Kompressor (6) verdichtete Luft aus dem Abgasturbolader (4) oder Luft aus zumindest einer weiteren Luftquelle zugeführt wird, wobei das Verfahren folgende Verfahrensschritte umfasst:
(i) Erfassen einer Drehmomentanforderung an die Verbrennungskraftmaschine (2), Ermitteln eines aktuellen Ladeluftdrucks (p) und Ermitteln eines aktuellen Drucks des Fahrzeugluftsystems;
(ii) Vergleichen des aktuellen Ladeluftdrucks (p) mit einem zu dieser Drehmomentanforderung korrespondierenden Soll-Ladeluftdruck (pₛₒₗₗ) und Vergleichen des ermittelten aktuellen Drucks des Fahrzeugluftsystems mit einem Sollbetriebsdruck des Fahrzeugluftsystems; und
(iii) Regeln des Ladeluftdrucks (p) durch Unterbinden einer Zuführung von durch den Abgasturbolader (4) gelieferter verdichteter Luft an den Kompressor (6), wenn der ermittelte aktuelle Ladeluftdruck (p) kleiner als der korrespondierende Soll-Ladeluftdruck (pₛₒₗₗ) ist und der aktuelle Druck des Fahrzeugluftsystems größer als oder gleich dem Sollbetriebsdruck des Fahrzeugluftsystems ist, und durch Unterbinden einer Zuführung von durch den Abgasturbolader (4) gelieferter verdichteter Luft an den Kompressor (6) und Zuführen von Luft an den Kompressor (6) aus zumindest einer weiteren Luftquelle, wenn der ermittelte aktuelle Ladeluftdruck (p) kleiner als der korrespondierende Soll-Ladeluftdruck (pₛₒₗₗ) ist und der aktuelle Druck des Fahrzeugluftsystems kleiner als der Sollbetriebsdruck des Fahrzeugluftsystems ist,
wobei zum Unterbinden der Zuführung von durch den Abgasturbolader (4) gelieferter verdichteter Luft an den Kompressor (6) der Kompressor (6) ausgeschaltet wird, wenn der ermittelte aktuelle Ladeluftdruck (p) kleiner als der korrespondierende Soll-Ladeluftdruck (pₛₒₗₗ) ist und der aktuelle Druck des Fahrzeugluftsystems größer als oder gleich dem Sollbetriebsdruck des Fahrzeugluftsystems ist.

5. Verfahren nach Anspruch 4, **dadurch gekennzeichnet, dass** beim Ausschalten bei einem elektrisch angetriebenen Kompressor (6) der elektrische Antrieb ausgeschaltet wird, bei einem über eine schaltbare Kupplungseinrichtung (7) mit einem Antrieb gekoppelten Kompressor (6) die Kupplungseinrichtung (7) ausgekuppelt wird und/oder bei einem sowohl von einem elektrischen Antrieb als auch über eine schaltbare Kupplungseinrichtung (7) von einem weiteren Antrieb angetriebenen Kompressor (6) der elektrische Antrieb ausgeschaltet und die schaltbare Kupplungseinrichtung (7) ausgekuppelt wird.

6. Verfahren nach Anspruch 4, **dadurch gekennzeichnet, dass** zum Unterbinden der Zuführung von durch den Abgasturbolader (4) gelieferter verdichteter Luft an den Kompressor (6) der Kompressor (6) mit der zumindest einen weiteren Luftquelle durch Umschalten zumindest eines Ventils (24, 25) verbunden wird.

7. Verfahren nach einem der Ansprüche 4 bis 6, **dadurch gekennzeichnet, dass** das Vergleichen der Ladeluftdrücke durch das Motorsteuergerät (31) erfolgt und dieses ein Signal erzeugt, wenn der ermittelte aktuelle Ladeluftdruck (p) kleiner als der korrespondierende Soll-Ladeluftdruck (pₛₒₗₗ) ist, wobei das erzeugte Signal an die Luftaufbereitung (23) geleitet wird, welche dann das Vergleichen des ermittelten aktuellen Drucks des Fahrzeugluftsystems mit dem Sollbetriebsdruck des Fahrzeugluftsystems ausführt.

8. Verfahren nach einem der Ansprüche 4 bis 7, **dadurch gekennzeichnet, dass** das Unterbinden der Zuführung von durch den Abgasturbolader (4) gelieferter verdichteter Luft an den Kompressor (6) durch das Motorsteuergerät (31), die Luftaufbereitung (23) oder/und eine Kompressorsystemsteuereinrichtung (27) ausgeführt wird.

9. Vorrichtung zur Regelung eines Ladeluftdrucks (p) einer Verbrennungskraftmaschine (2) eines Fahrzeugs (1) zur Durchführung des Verfahrens nach einem der Ansprüche 1 bis 3, mit:
a) einem Abgasturbolader (4) zur Erzeugung verdichteter Ladeluft;
b) einer Frischgasversorgungseinrichtung (5) zur Zuführung der verdichteten Ladeluft und von zusätzlichem Frischgas zur Verbrennungskraftmaschine (2);
c) einem Fahrzeugluftsystem mit einer Luftaufbereitung (23), wobei die Luftaufbereitung zur Steuerung des Fahrzeugluftsystems und zur Ermittlung eines aktuellen Drucks des Fahrzeugluftsystems vorgesehen ist;
d) einem Kompressor (6) zur Erzeugung von Druckluft für das Fahrzeugluftsystem, wobei der Kompressor (6) zur Zuführung von verdichteter Ladeluft an den Kompressor (6) mit dem Abgasturbolader (4) verbunden ist; und
e) einem Motorsteuergerät (31) zur Steuerung der Verbrennungskraftmaschine, zur Erfassung einer Drehmomentanforderung an die Verbrennungskraftmaschine (2) zur Ermittlung eines aktuellen Ladeluftdrucks (p),
f) wobei das Motorsteuergerät (31) zum Vergleich des aktuellen Ladeluftdrucks (p) mit einem zu dieser Drehmomentanforderung korrespondierenden Soll-Ladeluftdruck (pₛₒₗₗ) und zur Erzeugung eines Signals, wenn der aktuelle Ladeluftdruck (p) kleiner als der Soll-Ladeluftdruck (pₛₒₗₗ) ist, und zur Weiterleitung dieses Signals an die Luftaufbereitung (23) ausgebildet ist, und
g) wobei die Luftaufbereitung (23) und/oder das Motorsteuergerät (31) zum Vergleich des ermittelten aktuellen Drucks des Fahrzeugluftsystems mit einem Sollbetriebsdruck des Fahrzeugluftsystems und zur Regelung des Ladeluftdrucks (p) durch Unterbindung einer Zuführung von durch den Abgasturbolader (4) gelieferter verdichteter Luft an den Kompressor (6) und Ausschalten des Kompressors (6), wenn der ermittelte aktuelle Ladeluftdruck (p) kleiner als der korrespondierende Soll-Ladeluftdruck (pₛₒₗₗ) ist und der aktuelle Druck des Fahrzeugluftsystems größer als der oder gleich dem Sollbetriebsdruck des Fahrzeugluftsystems ist, ausgebildet ist.

10. Vorrichtung nach Anspruch 9, **dadurch gekennzeichnet, dass** bei einem elektrisch angetriebenen Kompressor (6) der elektrische Antrieb mit der Luftaufbereitung (23) und/oder dem Motorsteuergerät (31) verbunden ist, bei einem über eine schaltbare Kupplungseinrichtung (7) mit einem Antrieb gekoppelten Kompressor (6) die Kupplungseinrichtung (7) mit der Luftaufbereitung (23) und/oder dem Motorsteuergerät (31) verbunden ist und/oder bei einem sowohl von einem elektrischen Antrieb als auch über eine schaltbare Kupplungseinrichtung (7) von einem weiteren Antrieb angetriebenen Kompressor (6) der elektrische Antrieb und die schaltbare Kupplungseinrichtung (7) mit der Luftaufbereitung (23) und/oder dem Motorsteuergerät (31) verbunden sind.

11. Vorrichtung zur Regelung eines Ladeluftdrucks (p) einer Verbrennungskraftmaschine (2) eines Fahrzeugs (1) zur Durchführung des Verfahrens nach einem der Ansprüche 4 bis 8, mit:
(i) einem Abgasturbolader (4) zur Erzeugung verdichteter Ladeluft;
(ii) einer Frischgasversorgungseinrichtung (5) zur Zuführung der verdichteten Ladeluft und von zusätzlichem Frischgas zur Verbrennungskraftmaschine (2);
(iii) einem Fahrzeugluftsystem mit einer Luftaufbereitung (23), wobei die Luftaufbereitung zur Steuerung des Fahrzeugluftsystems und zur Ermittlung eines aktuellen Drucks des Fahrzeugluftsystems vorgesehen ist;
(iv) einem Kompressor (6) zur Erzeugung von Druckluft für das Fahrzeugluftsystem, wobei der Kompressor (6) zur Zuführung von verdichteter Ladeluft an den Kompressor (6) mit dem Abgasturbolader (4) und zur Zuführung von Ladeluft aus zumindest einer weiteren Luftquelle verbindbar ist; und
(v) einem Motorsteuergerät (31) zur Steuerung der Verbrennungskraftmaschine und zur Erfassung einer Drehmomentanforderung an die Verbrennungskraftmaschine (2),
(vi) wobei das Motorsteuergerät (31) zum Vergleich des aktuellen Ladeluftdrucks (p) mit einem zu dieser Drehmomentanforderung korrespondierenden Soll-Ladeluftdruck (pₛₒₗₗ) und zur Erzeugung eines Signals, wenn der aktuelle Ladeluftdruck (p) kleiner als der Soll-Ladeluftdruck (pₛₒₗₗ) ist, und zur Weiterleitung dieses Signals an die Luftaufbereitung (23) ausgebildet ist, und
(vii) wobei die Luftaufbereitung (23) und/oder das Motorsteuergerät (31) zum Vergleich des ermittelten aktuellen Drucks des Fahrzeugluftsystems mit einem Sollbetriebsdruck des Fahrzeugluftsystems und zur Regelung des Ladeluftdrucks (p) durch Unterbindung einer Zuführung von durch den Abgasturbolader (4) gelieferter verdichteter Luft an den Kompressor (6) und Ausschalten des Kompressors (6), wenn der ermittelte aktuelle Ladeluftdruck (p) kleiner als der korrespondierende Soll-Ladeluftdruck (pₛₒₗₗ) ist und der aktuelle Druck des Fahrzeugluftsystems größer als der oder gleich dem Sollbetriebsdruck des Fahrzeugluftsystems ist, und durch Unterbindung einer Zuführung von durch den Abgasturbolader (4) gelieferter verdichteter Luft an den Kompressor (6) und Zuführung von Luft an den Kompressor (6) aus zumindest einer weiteren Luftquelle, wenn der ermittelte aktuelle Ladeluftdruck (p) kleiner als der korrespondierende Soll-Ladeluftdruck (pₛₒₗₗ) ist und der aktuelle Druck des Fahrzeugluftsystems kleiner als der Sollbetriebsdruck des Fahrzeugluftsystems ist, ausgebildet ist.

12. Vorrichtung nach Anspruch 11, **dadurch gekennzeichnet, dass** der Kompressor (6) über ein Saugluftventil (24) mit der zumindest einen weiteren Luftquelle verbindbar und über ein Ladeluftventil (25) mit dem Abgasturbolader (4) verbindbar ist.

13. Vorrichtung nach Anspruch 11 oder 12, **dadurch gekennzeichnet, dass** die Vorrichtung zur Verbindung des Motorsteuergeräts (31), der Luftaufbereitung (23), der Frischgasversorgungseinrichtung (5) und einer Kompressorsystemsteuereinrichtung (27) eine Buseinrichtung (32) aufweist.

## Claims

1. Method for regulating a charge air pressure (p) of an internal combustion engine (2) of a vehicle (1), having an exhaust gas turbocharger (4), a fresh gas supply device (5), a vehicle air system with an air treatment system (23) and a compressor (6) that can be charged by the exhaust gas turbocharger (4) and an engine controller (31), wherein the method comprises the following steps:
(i) detecting a torque requirement of the internal combustion engine (2), determining a current charge air pressure (p) and determining a current pressure of the vehicle air system;
(ii) comparing the current charge air pressure (p) to a target charge air pressure (psoll) corresponding to this torque requirement, and comparing the determined current pressure of the vehicle air system to a target operating pressure of the vehicle air system; and
(iii) regulating the charge air pressure (9) by suppressing a supply of compressed air, supplied by the exhaust gas turbocharger (4), to the compressor (6) when the determined current charge air pressure (p) is less than the corresponding target charge air pressure (Psoll) and the current pressure of the vehicle air system is greater than or equal to the target operating pressure of the vehicle air system,
wherein the comparison of the current charge air pressure (p) is realised by the engine controller (31) and this generates a signal when the determined current charge air pressure (p) is less than the corresponding target charge air pressure (psoll), wherein the signal generated is sent to the air treatment system (23), which then carries out the comparison of the determined current pressure of the vehicle air system with the target operating pressure of the vehicle air system, wherein
to suppress the supply of compressed air, supplied by the exhaust gas turbocharger (4), to the compressor (6), the compressor (6) is switched off.

2. Method according to claim 1, **characterised in that** the switching-off of the compressor (6) is carried out by the engine controller (31), the air treatment system (23) and / or a compressor system control device (27).

3. Method according to claim 1 or 2, **characterised in that**, when switching off, in the case of an electrically driven compressor (6), the electric drive is switched off, in the case of a compressor (6) coupled via a switchable coupling means to a drive, the coupling means (7) is decoupled, and / or in the case of a compressor (6) driven both by an electric drive and also, via a switchable coupling means (7), by a further drive, the electric drive is switched off and the switchable coupling means (7) is decoupled.

4. Method for regulating a charge air pressure (p) of an internal combustion engine (2) of a vehicle (1), having an exhaust gas turbocharger (4), a fresh gas supply device (5), a vehicle air system with an air treatment system (23), and a compressor (6) and an engine controller (31), wherein compressed air from the exhaust gas turbocharger (4) or air from at least one further air source is supplied to the compressor (6), wherein the method comprises the following steps:
(i) detecting a torque requirement of the internal combustion engine (2), determining a current charge air pressure (p) and determining a current pressure of the vehicle air system;
(ii) comparing the current charge air pressure (p) to a target charge air pressure (psoll) corresponding to this torque requirement, and comparing the determined current pressure of the vehicle air system to a target operating pressure of the vehicle air system; and
(iii) regulating the charge air pressure (p) by suppressing a supply of compressed air, supplied by the exhaust gas turbocharger (4), to the compressor (6), when the determined current charge air pressure (p) is less than the corresponding target charge air pressure (psoll) and the current pressure of the vehicle air system is greater than or equal to the target operating pressure of the vehicle air system, and by suppressing a supply of compressed air, supplied by the exhaust gas turbocharger (4), to the compressor (6) and supplying air to the compressor (6) from at least one further air source, when the determined current charge air pressure (p) is less than the corresponding target charge air pressure (psoll) and the current pressure of the vehicle air system is less than the target operating pressure of the vehicle air system,
wherein to suppress the supply of compressed air, supplied by the exhaust gas turbocharger (4), to the compressor (6), the compressor (6) is switched off when the determined current charge air pressure (p) is less than the corresponding target charge air pressure (psoll) and the current pressure of the vehicle air system is greater than or equal to the target operating pressure of the vehicle air system.

5. Method according to claim 4, **characterised in that**, when switching off, in the case of an electrically driven compressor (6). the electric drive is switched off, in the case of a compressor (6) coupled, via a switchable coupling means (7), to a drive, the coupling means (7) is decoupled and / or in the case of a compressor (6) driven by both an electric drive and also, via a switchable coupling means (7), by a further drive, the electric drive is switched off and the switchable coupling means (7) is decoupled.

6. Method according to claim 4, **characterised in that**, to suppress the supply of compressor air, supplied by the exhaust gas turbocharger (4), to the compressor (6), the compressor (6) is connected to the at least one further air source through the switchover of at least one valve (24, 25).

7. Method according to one of claims 4 to 6, **characterised in that** the comparison of the charge air pressures is realised by the engine controller (31) and this generates a signal when the determined current charge air pressure (p) is less than the corresponding target charge air pressure (psoll), wherein the generated signal is sent to the air treatment system (23), which then carries out the comparison of the determined current pressure of the vehicle air system with the target operating pressure of the vehicle air system.

8. Method according to one of claims 4 to 7, **characterised in that** the suppression of the supply of compressed air, supplied by the exhaust gas turbocharger (4), to the compressor (6), is carried out by the engine controller (31), the air treatment system (23) and / or a compressor system control device (27).

9. Device for regulating a charge air pressure (p) of an internal combustion engine (2) of a vehicle (1) to carry out the method according to one of the claims 1 to 3, having:
a) an exhaust gas turbocharger (4) to generate compressed charge air;
b) a fresh gas supply device (5) to supply the compressed charge air and additional fresh gas to the internal combustion engine (2);
c) a vehicle air system having an air treatment system (23), wherein the air treatment system is provided to control the vehicle air system and to determine a current pressure of the vehicle air system;
d) a compressor (6) for generating compressed air for the vehicle air system, wherein the compressor (6) is connected to the exhaust gas turbocharger (4) for the supply of compressed charge air to the compressor (6); and
e) an engine controller (31) for controlling the internal combustion engine, for detecting a torque requirement of the internal combustion engine (2), for determining a current charge air pressure (p),
f) wherein the engine controller (31) is designed to compare the current charge air pressure (p) to a target charge air pressure (psoll) corresponding to this torque requirement, and to generate a signal when the current charge air pressure (p) is less than the target charge air pressure (psoll), and to forward this signal to the air treatment system (23), and
g) wherein the air treatment system (23) and / or the engine controller (31) is / are designed to compare the determined current pressure of the vehicle air system to a target operating pressure of the vehicle air system, and to regulate the charge air pressure (p), by suppressing a feed of compressed air, supplied by the exhaust gas turbocharger (4), to the compressor (6), and to switch off the compressor (6) when the determined current charge air pressure (p) is less than the corresponding target charge air pressure (psoll) and the current pressure of the vehicle air system is greater than or equal to the target operating pressure of the vehicle air system.

10. Device according to claim 9, **characterised in that** in the case of an electrically driven compressor (6) the electric drive is connected to the air treatment system (23) and / or the engine controller (31), in the case of a compressor (6) coupled via a switchable coupling means (7) to a drive, the coupling device (7) is connected to the air treatment system (23) and / or the engine controller (31), and / or in the case of a compressor (6) driven both by an electric drive and also, via a switchable coupling means (7), by a further drive, the electric drive and the switchable coupling device (7) are connected to the air treatment system (23) and / or the engine controller (31).

11. Device for regulating a charge air pressure (p) of an internal combustion engine (2) of a vehicle (1) to carry out the method according to one of claims 4 to 8, having
(i) an exhaust gas turbocharger (4) to generate compressed charge air;
(ii) a fresh gas supply device (5) to supply the compressed charge air and additional fresh gas to the internal combustion engine (2);
(iii) a vehicle air system with an air treatment system (23), wherein the air treatment system is provided to control the vehicle air system and to determine a current pressure of the vehicle air system;
(iv) a compressor (6) for generating compressed air for the vehicle air system, wherein the compressor (6) can be connected to the exhaust gas turbocharger (4) for the supply of compressed charge air to the compressor (6), and for the supply of charge air from at least one further air source; and
(v) an engine controller (31) for controlling the internal combustion engine and for detecting a torque requirement of the internal combustion engine (2),
(vi) wherein the engine controller (31) is designed to compare the current charge air pressure (p) to a target charge air pressure (psoll) corresponding to this torque requirement, and to generate a signal when the current charge air pressure (p) is less than the target charge air pressure (psoll) and to forward this signal to the air treatment system (23) and
(vii) wherein the air treatment system (23) and / or the engine controller (31) is / are designed to compare the determined current pressure of the vehicle air system to a target operating pressure of the vehicle air system and to regulate the charge air pressure (p) by suppressing a supply of compressed air, supplied by the exhaust gas turbocharger (4), to the compressor (6), and to switch off the compressor (6) when the determined current charge air pressure (p) is less than the corresponding target charge air pressure (psoll) and the current pressure of the vehicle air system is greater than or equal to the target operating pressure of the vehicle air system, and to suppress a supply of compressed air, supplied by the exhaust gas turbocharger (4), to the compressor (6) and supply air to the compressor (6) from at least one further air source when the determined current charge air pressure (p) is less than the corresponding target charge air pressure (psoll) and the current pressure of the vehicle air system is less than the target operating pressure of the vehicle air system.

12. Device according to claim 11, **characterised in that** the compressor (6) can be connected, via a suction air valve (24), to the at least one further air source and, via a charge air valve (25), to the exhaust gas turbocharger (4).

13. Device according to claim 11 or 12, **characterised in that** the device for connecting the engine controller (31), the air treatment system (23), the fresh gas supply device (5) and a compressor system control device (27) has a bus device (32)

## Revendications

1. Procédé de régulation de la pression ( p ) d'air de suralimentation d'une machine ( 2 ) à combustion interne d'un véhicule ( 1 ), comprenant un turbocompresseur ( 4 ) à gaz d'échappement, un dispositif ( 5 ) d'alimentation en gaz frais, un système d'air de véhicule ayant un conditionnement ( 23 ) d'air et un compresseur ( 6 ) pouvant être chargé par le turbocompresseur ( 4 ) à gaz,
et un appareil ( 31 ) de commande de moteur, le procédé comprenant les stades de procédé suivantes :
( i ) on détecte une demande de couple sur la machine ( 2 ) à combustion interne, on détermine une pression ( p ) instantanée d'air de suralimentation et on détermine une pression instantanée du système d'air de véhicule ;
( ii ) on compare la pression ( p ) instantanée d'air de suralimentation à une pression ( Pₛₒₗₗ ) de consigne d'air de suralimentation, correspondant à cette demande de couple et on compare la pression instantanée déterminée du système d'air de véhicule à une pression de fonctionnement de consigne du système d'air de véhicule et
(iii) on régule la pression ( p ) d'air de suralimentation en supprimant un envoi au compresseur ( 6 ) d'air comprimé fourni par le turbocompresseur ( 4 ) à gaz d'échappement, si la pression ( p ) instantanée déterminée d'air de suralimentation est plus petitE que la pression ( Pₛₒₗₗ ) de consigne d'air de suralimentation correspondante et si la pression instantanée du système d'air de véhicule est supérieure ou égale à la pression de fonctionnement de consigne du système d'air de véhicule,
dans lequel la comparaison de la pression ( p ) instantanée d'air de suralimentation est effectuée par l'appareil ( 31 ) de commande du moteur et celui-ci produit un signal, si la pression ( p ) instantanée déterminée de l'air de suralimentation est plus petite que la pression ( Pₛₒₗₗ ) de consigne d'air de suralimentation correspondante, le signal produit étant envoyé au conditionnement ( 23 ) d'air, qui effectue alors la comparaison de la pression instantanée déterminée du système d'air de véhicule à la pression de fonctionnement de consigne du système d'air de véhicule, dans lequel, pour supprimer l'envoi au compresseur ( 6 ) d'air comprimé fourni par le turbocompresseur ( 4 ) à gaz, on arrête le compresseur ( 6 ).

2. Procédé suivant la revendication 1, **caractérisé en ce que** l'on effectue l'arrêt du compresseur ( 6 ) par l'appareil ( 31 ) de commande du moteur, le conditionnement ( 23 ) d'air ou/et un dispositif ( 27 ) de commande de système de compresseur.

3. Procédé suivant la revendication 1 ou 2, **caractérisé en ce que**, lors de l'arrêt pour un compresseur ( 6 ) à entraînement électrique, on arrête l'entraînement électrique, pour un compresseur ( 6 ) couplé à un entraînement par un dispositif ( 7 ) d'embrayage embrayable, on débraie le dispositif ( 7 ) d'embrayage et/ou, pour un compresseur ( 6 ) entraîné à la fois par un entraînement électrique et également par un autre entraînement par l'intermédiaire d'un dispositif ( 7 ) d'embrayage embrayable, on arrêt l'entraînement électrique et on débraie le dispositif ( 7 ) d'embrayage embrayable.

4. Procédé de régulation d'une pression ( p ) d'air de suralimentation d'une machine ( 2 ) à combustion interne d'un véhicule ( 1 ), comprenant un turbocompresseur ( 4 ) à gaz d'échappement, un dispositif ( 5 ) d'alimentation en gaz frais, un système d'air de véhicule ayant un conditionnement ( 23 ) d'air et un compresseur ( 6 ) et un appareil ( 31 ) de commande de moteur, de l'air comprimé, provenant du turbocompresseur ( 4 ) à gaz d'échappement, ou de l'air, d'au moins une autre source d'air, étant envoyé au compresseur ( 6 ), le procédé comprenant les stades de procédé suivants :
i ) on détecte une demande de couple sur la machine ( 2 ) à combustion interne, on détermine une pression ( p ) instantanée d'air de suralimentation et on détermine une pression instantanée du système d'air de véhicule ;
( ii ) on compare la pression ( p ) instantanée d'air de suralimentation à une pression ( Pₛₒₗₗ ) de consigne d'air de suralimentation, correspondant à cette demande de couple et on compare la pression instantanée déterminée du système d'air de véhicule à une pression de fonctionnement de consigne du système d'air de véhicule et
( iii ) on régule la pression ( p ) d'air de suralimentation par suppression d'un envoi au compresseur ( 6 ) d'air comprimé fourni par le turbocompresseur ( 4 ) à gaz d'échappement, si la pression ( p ) instantanée déterminée d'air de suralimentation est plus petite que la pression ( Pₛₒₗₗ ) de consigne d'air de suralimentation correspondante et si la pression instantanée du système d'air de véhicule est supérieure ou égale à la pression de fonctionnement de consigne du système d'air de véhicule, et par suppression d'un envoi au compresseur ( 6 ) d'air comprimé fourni par le turbocompresseur ( 4 ) à gaz d'échappement et par envoi d'air au compresseur ( 6 ), à partir d'au moins une autre source d'air, lorsque la pression ( p ) instantanée déterminée de l'air de suralimentation est plus petite que la pression ( Pₛₒₗₗ ) de consigne d'air de suralimentation correspondante et lorsque la pression instantanée du système d'air de véhicule est plus petite que la pression de fonctionnement de consigne du système d'air de véhicule,
dans lequel, pour supprimer l'envoi au compresseur ( 6 ) d'air comprimé fourni par le turbocompresseur ( 4 ) à gaz d'échappement, on arrête le compresseur ( 6 ), lorsque la pression ( p ) instantanée déterminée de l'air de suralimentation est plus petite que la pression ( Pₛₒₗₗ ) de consigne d'air de suralimentation correspondante et lorsque la pression instantanée des systèmes d'air de véhicule est supérieure ou égale à la pression de fonctionnement de consigne du système d'air de véhicule.

5. Procédé suivant la revendication 4, **caractérisé en ce que**, lors de l'arrêt pour un compresseur ( 6 ) à entraînement électrique, on arrêt l'entraînement électrique, pour un compresseur ( 6 ) couplé à un entraînement par un dispositif ( 7 ) d'embrayage embrayable, on débraie le dispositif ( 7 ) ) d'embrayage et/ou, pour un compresseur ( 6 ) entraîné à la fois par un entraînement électrique et également par un autre entraînement, par l'intermédiaire d'un dispositif ( 7 ) d'embrayage embrayable, on arrêt l'entraînement électrique et on débraie le dispositif ( 7 ) d'embrayage embrayable.

6. Procédé suivant la revendication 4, **caractérisé en ce que**, pour supprimer l'envoi au compresseur ( 6 ) d'air comprimé fourni par le turbocompresseur ( 4 ) à gaz d'échappement, on met le compresseur ( 6 ) en communication avec la au moins une autre source d'air, par inversion d'au moins une vanne ( 24, 25 ).

7. Procédé suivant l'une des revendications 4 à 6, **caractérisé en ce que** la comparaison de la pression ( p ) instantanée d'air de suralimentation est effectuée par l'appareil ( 31 ) de commande du moteur et celui-ci produit un signal, si la pression ( p ) instantanée déterminée de l'air de suralimentation est plus petite que la pression ( Pₛₒₗₗ ) de consigne d'air de suralimentation correspondante, le signal produit étant envoyé au conditionnement ( 23 ) d'air, qui effectue alors la comparaison de la pression instantanée déterminée du système d'air de véhicule à la pression de fonctionnement de consigne du système d'air de véhicule.

8. Procédé suivant l'une des revendications 4 à 7, **caractérisé en ce que** la suppression de l'envoi au compresseur ( 6 ) d'air comprimé fourni par le turbocompresseur ( 4 ) à gaz d'échappement est réalisée par l'appareil ( 31 ) de commande du moteur, le conditionnement ( 23 ) d'air ou/et un dispositif ( 27 ) de commande de système de compresseur.

9. Système de régulation d'une pression ( p ) d'air de suralimentation d'une machine ( 2 ) à combustion interne d'un véhicule ( 1 ) pour effectuer le procédé suivant l'une des revendications 1 à 3, comprenant :
a ) un turbocompresseur ( 4 ) à gaz d'échappement pour produire de l'air de suralimentation comprimé ;
b ) un dispositif ( 5 ) d'alimentation en gaz frais pour apporter l'air de suralimentation comprimé et du gaz frais supplémentaire à la machine ( 2 ) à combustion interne ;
c ) un système d'air de véhicule comprenant un conditionnement ( 23 ) d'air, le conditionnement d'air étant prévu pour la commande du système d'air de véhicule et pour la détermination d'une pression instantanée du système d'air de véhicule ;
d ) un compresseur ( 6 ) pour produire de l'air comprimé pour le système d'air de véhicule, le compresseur ( 6 ) communiquant, pour l'envoi d'air de suralimentation comprimé, au compresseur ( 6 ) avec le turbocompresseur ( 4 ) à gaz d'échappement et
e ) un appareil ( 31 ) de commande de moteur pour commander la machine à combustion interne pour détecter une demande de couple sur la machine ( 2 ) à combustion interne, pour déterminer une pression ( p ) instantanée d'air de suralimentation,
f ) dans lequel l'appareil ( 31 ) de commande de moteur est constitué pour comparer la pression ( p ) instantanée d'air de suralimentation à une pression ( Pₛₒₗₗ ) de consigne d'air de suralimentation correspondant à cette demande de couple et pour produire un signal lorsque la pression ( p ) instantanée d'air de suralimentation est plus petite que la pression ( Pₛₒₗₗ ) de consigne d'air de suralimentation et pour acheminer ce signal au conditionnement ( 23 ) d'air et
g ) dans lequel le conditionnement ( 23 ) d'air et/ou l'appareil ( 31 ) de commande de moteur est constitué pour comparer la pression instantanée déterminée du système d'air de véhicule à une pression de fonctionnement de consigne du système d'air de véhicule et pour réguler la pression ( p ) d'air de suralimentation en supprimant un envoi au compresseur ( 6 ) d'air comprimé fourni par le turbocompresseur ( 4 ) à gaz d'échappement et pour arrêter le compresseur ( 6 ) lorsque la pression ( p ) instantanée déterminée d'air de suralimentation est plus petite que la pression ( Pₛₒₗₗ ) de consigne d'air de suralimentation correspondante et lorsque la pression instantanée du système d'air de véhicule est supérieure ou égale à la pression de fonctionnement de consigne du système d'air de véhicule.

10. Système suivant la revendication 9, **caractérisé en ce que**, pour un compresseur ( 6 ) entraîné électriquement, l'entraînement électrique est relié au conditionnement ( 23 ) d'air et/ou à l'appareil ( 31 ) de commande de moteur, pour un compresseur ( 6 ) couplé à un entraînement par un dispositif ( 7 ) d'embrayage embrayable, le dispositif ( 7 ) d'embrayage est relié au conditionnement ( 23 ) d'air et/ou à l'appareil ( 31 ) de commande de moteur et/ou, pour un compresseur ( 6 ), entraîné à la fois par un entraînement électrique et par un autre entraînement par l'intermédiaire d'un dispositif ( 7 ) d'embrayage embrayable, l'entraînement électrique et le dispositif ( 7 ) d'embrayage embrayable sont couplés au conditionnement ( 23 ) d'air et/ou à l'appareil ( 31 ) de commande de moteur.

11. Système de régulation d'une pression ( p ) d'air de suralimentation d'une machine ( 2 ) à combustion interne d'un véhicule ( 1 ) pour effectuer le procédé suivant l'une des revendications 1 à 3, comprenant :
i ) un turbocompresseur ( 4 ) à gaz d'échappement pour produire de l'air de suralimentation comprimé ;
ii ) un dispositif ( 5 ) d'alimentation en gaz frais pour apporter l'air de suralimentation comprimé et du gaz frais supplémentaire à la machine ( 2 ) à combustion interne ;
iii ) un système d'air de véhicule comprenant un conditionnement ( 23 ) d'air, le conditionnement d'air étant prévu pour la commande du système d'air de véhicule et pour la détermination d'une pression instantanée du système d'air de véhicule ;
iv ) un compresseur ( 6 ) de production d'air comprimé pour le système d'air de véhicule, le compresseur ( 6 ) pouvant, pour l'envoi d'air de suralimentation comprimé au compresseur ( 6 ), être relié au turbocompresseur ( 4 ) à gaz d'échappement et pour l'envoi d'air de suralimentation, provenant d'au moins une autre source d'air et
v ) un appareil ( 31 ) de commande de moteur, pour commander la machine à combustion interne et pour détecter une demande de couple de la machine ( 2 ) à combustion interne,
vi ) dans lequel l'appareil ( 31 ) de commande de moteur est constitué pour comparer la pression ( p ) instantanée d'air de suralimentation à une pression ( Pₛₒₗₗ ) de consigne d'air de suralimentation correspondante à cette demande de couple et pour produire un signal lorsque la pression ( p ) instantanée d'air de suralimentation est plus petite que la pression ( Pₛₒₗₗ ) de consigne d'air de suralimentation et pour acheminer ce signal au conditionnement ( 23 ) d'air et
vii ) dans lequel le conditionnement ( 23 ) d'air et/ou l'appareil ( 31 ) de commande de moteur est constitué pour comparer la pression instantanée déterminée du système d'air de véhicule à une pression de fonctionnement de consigne du système d'air de véhicule et pour réguler la pression ( p ) d'air de suralimentation en supprimant un envoi au compresseur ( 6 ) d'air comprimé fourni par le turbocompresseur ( 4 ) à gaz d'échappement et en arrêtant le compresseur ( 6 ) lorsque la pression ( p ) instantanée déterminée d'air de suralimentation est plus petite que la pression ( Pₛₒₗₗ ) de consigne d'air de suralimentation correspondante et lorsque la pression instantanée du système d'air de véhicule est supérieur ou égale à la pression de fonctionnement de consigne du système d'air de véhicule et en supprimant un envoi au compresseur ( 6 ) d'air comprimé fourni par le turbocompresseur ( 4 ) à gaz d'échappement et en envoyant de l'air au compresseur ( 6 ) à partir d'au moins une autre source d'air, lorsque la pression ( p ) instantanée déterminée d'air de suralimentation est plus petit que la pression ( Pₛₒₗₗ ) de consigne d'air de suralimentation correspondante et lorsque la pression instantanée du système d'air de véhicule est plus petite que la pression de fonctionnement de consigne du système d'air de véhicule.

12. Système suivant la revendication 11, **caractérisé en ce que** le compresseur ( 6 ) peut être relié à au moins une autre source d'air par une vanne ( 24 ) pour de l'air d'aspiration et peut être relié au turbocompresseur ( 4 ) à gaz d'échappement par une vanne ( 25 ) d'air de suralimentation.

13. Système suivant la revendication 11 ou 12, **caractérisé en ce que** le système a un dispositif ( 32 ) de bus pour relier l'appareil ( 31 ) de commande de moteur, le conditionnement ( 23 ) d'air, le dispositif ( 5 ) d'alimentation en gaz frais et un dispositif ( 27 ) de commande de système de compresseur.
